(19) Europäisches Patentamt
European Patent Office
Office européen des brevets

(11) **EP 4 092 458 A1**

(12) **EUROPEAN PATENT APPLICATION**

(43) Date of publication:
**23.11.2022 Bulletin 2022/47**

(51) International Patent Classification (IPC):
**G02B 5/18** *(2006.01)*    **G02B 5/30** *(2006.01)*

(21) Application number: **21174795.1**

(52) Cooperative Patent Classification (CPC):
**G02B 5/1861; G02B 5/3083**

(22) Date of filing: **19.05.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universität Stuttgart**
**70174 Stuttgart (DE)**

(72) Inventors:
• **Bienert, Florian**
**70372 Stuttgart (DE)**
• **Pruß, Christof**
**73760 Ostfildern (DE)**
• **Abdou-Ahmed, Marwan**
**70565 Stuttgart (DE)**

(74) Representative: **Hoeger, Stellrecht & Partner Patentanwälte mbB**
**Uhlandstrasse 14c**
**70182 Stuttgart (DE)**

(54) **GRATING MIRROR AND RADIATION PROVIDING SYSTEM COMPRISING A GRATING MIRROR**

(57)    A grating mirror is provided which comprises a structured part which acts birefringently on a radiation field and further comprising a reflector for the radiation field on which the structured part is arranged.

**FIG.1**

**Description**

The invention relates to a grating mirror.

Furthermore, the invention relates to a radiation providing system comprising a grating mirror.

The problem underlying the invention is to improve a grating mirror and/or to improve a radiation providing system comprising a grating mirror.

According to embodiments of the invention, the problem is solved by a grating mirror, which comprises a structured part, which acts birefringently on a radiation field and which further comprises a reflector for the radiation field on which the structured part is arranged.

An advantage of the solution can be seen for example in the fact that the structured part acts birefringently on a radiation field which passes through the structured part and therefore a polarization of the radiation field can be manipulated in a desired way.

In particular the solution provides the advantage, that due to the structured part the polarization of the radiation field can be manipulated and because the grating mirror has a reflector for the radiation field losses and distortions in the radiation field can be reduced.

For example, transmission losses through a substrate of the grating mirror can be at least reduced or even avoided.

In advantageous embodiments the radiation field has to go through the structured part and is then reflected by the reflector and therefore in particular absorption losses are reduced, because the radiation field has not to go through structures behind the reflector like for example a substrate of the grating mirror.

In particular, the structured part needs only to be at least approximately half of the height than if the structured part would be used in transmission. For example, this eases the fabrication because of the lower aspect ratio that is needed to achieve the same effect, in particular an aspect ratio of a width to a depth of portions within the structured part can be smaller.

In particular, the lower height needed enables production of the grating mirror in better agreement with calculated designs.

Moreover, optical elements being used in transmission often have a substrate through which the radiation field has to pass which is associated with intensity losses and distortions to the radiation field. With having the birefringently acting structured part arranged on the reflector, the grating mirror may have a substrate for support without associated losses and distortions.

Another advantage can be that an absorption within the grating mirror is reduced, because the radiation field propagates essentially only through the structured part.

For example, this grating mirror can be used for radiation fields with large power because due to the lower absorption, the grating mirror is less adversely affected by the high power radiation field and therefore has a longer operating life time.

Preferably, the grating mirror is designed for a radiation field with a specific wave length and for example, in the following this specific wave length is meant when it is referred to the wave length.

With respect to the structured part no further details have been given so far.

In particular, the structured part exhibits a sub-wavelength structure.

In particular, the structured part is designed to induce a phase shift between two contributions of the radiation field when passing through the structured part.

Advantageously, therewith one has a polarization-shaping component for shaping the polarization of the radiation field.

In particular the two contributions have polarizations which are at least approximately perpendicular to each other.

Preferably, the structured part induces a phase shift of $\pi/n$, in particular per pass through the structured part, with n being an integer. Accordingly, after exiting the grating mirror the phase shift is $2\pi/n$ since the radiation field is reflected by the reflector and passes twice the structured part.

For example, n=2 and therefore the phase shift between the two contributions with different polarizations after exiting the grating mirror is $\pi$. Therefore the polarization of the radiation field can be rotated as desired with the grating mirror.

In other preferred embodiments n=4 and therefore the phase shift between the two contributions after exiting the grating mirror is $\pi/2$. For example, the polarization of the radiation field can then be changed from linear to a circular or elliptic polarization or vise versa.

In preferred embodiments, the structured part comprises a pattern of portions with alternating refractive indices, which for example extend along a respective direction of elongated extension.

In particular the structured part is designed as a waveguide structure.

For example, this provides the advantage that the structured part can be produced with standard processes for example of the semi-conductor industry. This enables the fabrication of the structured part in an easy way in batch production processes and enables for patterns at very large areas.

In some preferred embodiments, the structured part comprises several segments.

In particular, a local sub-wavelength structure within different segments is designed differently.

No further details about the influence of the structured part on the radiation field have been given so far.

Preferably, the structured part is designed such that a polarization of an incident radiation field is rotated by an angle upon passing of the radiation field through the structured part.

In particular, a given angle of rotation of the polarization corresponds to the difference between the polarization of the radiation field when incident on the grating mirror and when being reflected by the grating mirror.

In particular, a given angle of rotation of the polarization of the radiation field is induced when the radiation field passes the structured part twice.

In some preferred embodiments, the polarization is manipulated homogenously throughout the structured part.

In particular, the polarization is rotated at least approximately around a same angle throughout the structured part.

In other advantageous embodiments, the polarization is manipulated locally differently when passing through the structured part, in particular the angle by which the polarization is rotated differs locally.

In particular, the polarization is differently manipulated in the several segments, in particular an angle by which the polarization is rotated differs between the several segments.

In some preferred embodiments, at least one of the several segments is designed, in particular the portions within this at least one segment are designed, to rotate the polarization of the radiation field about a maximal angle when passing through the structured part.

In particular, the maximal angle is at least 150° or larger. Preferably, the maximal angle is at least approximately 180°.

Some advantageous embodiments provide, that at least one of the several segments is designed, in particular the portions within this at least one segment are designed, to have a minimal effect on the polarization, that is in particular to rotate the polarization about a minimal angle and/or to at least approximately leave the polarization of the incident radiation field unchanged when the radiation field passes through that at least one segment.

In particular, the minimal angle is 30° or smaller, for example 10° or smaller. Preferably, the minimal angle is at least approximately 0°.

In some preferred embodiments, at least one of the several segments is designed, in particular the portions within this at least one segment are designed, to rotate the polarization of the radiation field at least approximately by 90° when passing through the structured part.

These different embodiments provide for a wide variety to manipulate the polarization and to manipulate the polarization of the radiation field in a particular desired way.

For example, the structured part comprises at least one segment, within which the polarization is minimally affected, at least one segment in which the polarization is rotated about the maximal angle, and at least two segments in which the polarization is rotated at least approximately by 90°, with the rotation being in one of the two segments clockwise and in the other one of the two segments anticlockwise, which is particularly advantageous for example manipulating a linear polarization to a radial and/or azimuthal polarization and/or vice versa.

In particular, the segments in which the polarization is rotated at least approximately by 90° are located between the at least one segment, which affects the polarization minimally and the at least one segment in which the polarization is rotated about the maximal angle.

Preferably, the two segments, in which the polarization of the radiation field is at least approximately rotated by 90°, lie with respect to a circumferential direction around a central axis, for example around the optical axis, between the segment, in which the polarization is, minimally affected, and the segment in which the polarization is rotated about the maximal angle.

In preferred embodiments, the structured part is designed between the segment exhibiting the maximal angle and the segment exhibiting the minimal effect, in particular the segments in between are designed, to rotate the polarization of the radiation field in an at least approximately steady way.

In particular, the polarization of the radiation field is rotated by passing through a segment which is in between the segment exhibiting the maximum angle and the segment exhibiting the minimal effect by an angle, which is larger for a segment which is closer to the segment exhibiting the maximal angle than for a segment further away from the segment exhibiting the maximal angle.

In particular, an angle by which the polarization of the radiation field is rotated by passing through a respective segment which is in between the segment exhibiting the maximum angle and the segment exhibiting the minimal effect is smaller for a segment which is closer to the segment exhibiting the minimal effect than for a segment which is further away from the segment exhibiting the minimal effect.

In preferred embodiments, the segments are circular sectors around a central axis, for example the optical axis, of the grating mirror.

In particular the distance between two segments which are designed as sectors is measured by an angle between the respective sectors.

In advantageous embodiments, it is provided that an angle about which the polarization of the radiation field is rotated by passing through the structured part increases at least approximately steadily from a region of minimal rotation to a region of maximal rotation.

For example with that an at least quasi continuous manipulation of the polarization can be achieved.

In particular, the region of minimal rotation corresponds to the segment with minimal angle.

In particular, the region of maximal rotation corresponds to the segment which exhibits the maximal angle of rotation.

The features with respect to which the different segments differ to each other can be quite different and no further information have been given so far.

In particular, the different segments differ to each other with respect to the orientation in which the direction of elongated extension of the portions within the respective segment is orientated.

In particular, in at least two different segments the respective direction of elongated extension of the portions are differently orientated to each other.

Advantageously the respective directions of elongated extension within at least two different segments are at least approximately perpendicular to each other.

In particular, the orientation of the direction of elongated extension varies at least approximately steadily from one segments to another segment.

In particular, between the at least two segments there are several other segments for providing the approximately steadily variation of the orientation of the direction of elongated extension.

Preferably, the orientation of the direction of elongated extension varies at least approximately steadily between two segments which exhibit portions with direction of elongated extension which are at least approximately perpendicular to each other.

In advantageous embodiments, the orientation of the direction of elongated extension varies for example at least approximately steadily, along a circumferential direction around a center axis, for example around the optical axis, of the grating mirror.

Advantageous embodiments provide, that in the several segments of the structured part the portions run at least approximately linearly. For example, this provides for an easy production of the different segments.

Advantageously, the different segments are built by the same layer, preferably by providing differently orientated grooves within that layer.

In particular, the grooves run essentially along the direction of elongated extension.

This provides for an easy way to provide the structured part with different segments, in particular as described above.

No further details about the portions have been given so far.

Preferably, the structured part extends essentially in a geometrical structure plane, that is in particular that the extension of the structured part within the geometrical structure plane is much larger, for example at least five times larger, advantageously at least ten times larger, for example at least 50 times larger, within the geometrical plane than its extension perpendicular to the geometrical plane.

In particular, the portions run essentially within the geometrical structure plane.

Advantageously, the portions are adjacently arranged to each other in a direction within the geometrical structure plane.

In particular, there are two kinds of portions, one kind of portions with large refractive index and one kind of portions with a small refractive index.

Preferably, a difference of the refractive indices of the portions is at least 0,1 or larger, preferably at least 0,3 or larger, in particular at least 0,5 or larger. The larger the difference of the refractive indices of the portions is, the better is the form-birefringent effect of the structured part and the thinner the structured part can be designed.

An upper limit for the difference of the refractive indices is in particular given by available materials.

For example the difference of refractive indices in some embodiments is smaller than 3.

In particular, in some embodiments the difference of refractive indices is equal to or smaller than 2,5, for example equal or smaller than 2, for example equal to or smaller than 1,3.

In some advantageous embodiments the difference in refractive indices is between 0,2 and 1,2.

In advantageous embodiments, portions of the structured part, in particular the ones with the large refractive index, are composed of a material with a refractive index of at least 1,7 or larger. For example, these portions are composed of a material with a refractive index of 4 or smaller, in particular of 3,5 or smaller, for example of 2,5 or smaller.

For example, the structured part, in particular its portions, comprise $HfO_2$, Nb205, $TiO_2$, $Al_2O_3$, Si3N4, SiO2 and/or MgF2.

In some preferred embodiments, at least some portions of the structured part, in particular the portions with a large refractive index, are composed of $Ta_2O_5$.

In some advantageous embodiments, at least some portions, in particular the portions with the large reflective index, are composed of amorphous silicon. Preferably, the portions with a small refractive index have a refractive index of 1,7 or smaller.

In some embodiments, the portions with a small refractive index are composed of a material with a small refractive index, for example a refractive index of 1,7 or smaller.

In particular, if the portions with a small refractive index are composed of a material of the grating mirror, this material has a refractive index of 1 or larger, for example a refractive index of 1,3 or larger.

Advantageously, the portions with small refractive index are free of any material of the grating mirror and in particular have a refractive index of at least approximately 1.

In preferred embodiments, portions of the structured part, in particular the portions with small refractive index, are formed by grooves in the structured part.

For example, this allows for a high refractive index difference between the portions. In particular, the design of the structured part with grooves is an easy way to produce the structured part enabling an efficient mass production of the grating mirror with a structured part.

There can be many ways to build the grooves.

For example, only portions with high refractive index are arranged on the reflector with portions in between being left empty and forming the grooves.

In preferred embodiments, the grooves are etched in a layer of the material composing the portions with high refractive index.

The depths of the grooves can be designed to optimize the birefringent effect of the structured part.

In particular advantageous embodiments, the grooves extend from a top surface of the structured part into the structured part as far as the reflector.

In particular, the portions of the structured part extend elongated in a respective direction of elongated extension and have a smaller extension perpendicular to the direction of elongated extension.

In particular, the portions with alternating refractive indices are subsequently arranged to each other in a direction at least approximately perpendicular to their direction of elongated extension.

In particular, in some embodiments the direction of elongated extension of the portions is at least approximately constant throughout the structured part.

In some preferred embodiments, the portions of the structured part run linearly essentially throughout the extension of the structured part within the geometrical structure plane.

This enables for example for a homogenous manipulation of the polarization of the radiation field and in particular, a grating mirror with such a structured part can be used similar to a wave plate.

In some advantageous embodiments, the direction of elongated extension of the portions in particular within the geometrical structure plane of the structured part varies locally.

This allows for example for a locally different manipulation of the polarization of the radiation field.

For example, in some preferred embodiments, the direction of elongated extension varies along a curved shape of the portions.

In some advantageous embodiments, the respective directions of elongated extension within at least two segments, for example within a plurality of segments, of the structured part differ.

In some preferred embodiments, the local variation of the direction of elongated extension is designed to change a linear polarization of the incident radiation field to a radial polarization and/or to an azimuthal polarization and in particular vice versa.

In particular, in some embodiments the portions of the structured part have at least approximately a parabolic shape. For example, the respective direction of elongated extension runs at least approximately along a parabolic form.

Advantageously, this allows for a smooth spatial change of the polarization of the radiation field.

In particular, with a parabolic shape of the portions the polarization of the radiation field can at least approximately be changed from a linear polarization to a radial and/or azimuthal polarization or vice versa.

Preferably, in some embodiments, the portions of the structured part run piecewise linearly.

For example, at least in some of the segments of the structured part, preferably in at least most of the segments, for example in each of the segments, the portions run linearly in the respective segment with a direction of linear elongated extension differs between the different segments.

This enables for example for a locally varying manipulation of the polarization of the radiation field.

With piecewise linearly portions more complex shapes, for example curved shapes, of the portions can be approximated but with the piecewise linearly portions being easier to build in the production process.

In particular, with the piecewise linear portions a curved shape, for example a parabolic shape, of the portions is approximated.

In particular, there are two regions of extremal orientation of the direction of elongated extension and the direction varies between the two regions from the one extremal orientation to the other extremal orientation.

In a preferred embodiment the direction of elongated extension turns at least approximately steadily between two regions, preferably between two regions of extremal orientation. For example, this provides the advantage that a polarization of the radiation field can be manipulated locally in an at least quasi continuously manner.

In particular, it is to be understood that the direction turns at least approximately steadily along a path from one region to another region if the angle between the direction at a specific point along the path and the direction in the region in which the path starts becomes larger with increasing distance from the specific point from the starting region and/or if the angle between the direction at this specific point of the path and the direction in the region in which the path ends becomes smaller the closer the specific point to the end region is.

In some preferred embodiments, the at least approximately steadily turning direction changes at least approximately continuously. In particular, the polarization of the radiation field is then also at least approximately continuously manipulated.

In advantageous embodiments the at least approximately steadily turning direction changes piecewise its direction, for example it is provided by consecutively piecewise linearly running portions, which can provide the advantage of an easier production.

With respect to the variation of the refractive index within the structured part no further information have been given so far.

In advantageous embodiments, the refractive index varies within the structured part on a lengthscale which is smaller than the wavelength of the radiation field. In particular, this provides for a sub-wavelength structure within the structured part to provide its birefringent effect.

Preferably, a pattern in this structured part exhibits at least locally a periodicity X.

For example, at least a local structure within the structured part is subsequently repeated with a periodicity X.

In particular, in a direction which runs at least approximately perpendicular to the direction of elongated extension the portions with alternating refractive index are repeatingly arranged with a periodicity X.

In particular, the periodicity X is at least approximately the sum of the width of the two different kinds of portions of alternating refractive index. In particular, the width of these portions is measured in a direction which runs at least approximately perpendicular to the direction of elongated extension.

In preferred embodiments, a value of the periodicity X is the same within the several segments of the structured part.

In particular, the direction in which the respective structure in a segment repeats with a periodicity X differs however in the different segments.

The value of the periodicity X is in particular adjusted to achieve the desired optical properties and to reduce losses of energy, for example losses due to undesired diffraction.

Preferably the value of the periodicity X is chosen to not excite higher diffraction orders, in particular to not excite diffraction orders higher than the third order, for example to not excite diffraction orders higher than the zeroth order.

In advantageous embodiments, the periodicity X equals to or is smaller than the wave length L divided by the refractive index of the portions with a large refractive index.

Because with periodicities as provided in the previous paragraph the structured part can be more difficult to produce, for example because an aspect ratio of the portions with the large refractive index depends directly or indirectly on the periodicity and could become too extreme, in other preferred embodiments a bit larger periodicities are allowed.

In some preferred embodiments, the periodicity X equals to or is smaller than the wave length L divided by 70 % of the refractive index of the portions with a large refractive index, preferably equal to or smaller than the wave length L divided by 80 % of the refractive index of the portions with a large refractive index, in particular equal to or smaller than the wave length L divided by 85 % of the refractive index of the portions with a large refractive index.

For example, for such values of the periodicity higher diffraction orders exist but barely contain energy such that still a high diffraction efficiency is achieved.

For example, in some preferred embodiments the periodicity X equals to or is smaller than 75 % of the wave length of the radiation field (0,75 L), in particular equals to or is smaller than 60 % of the wave length (0,6 L).

In some advantageous embodiments, the periodicity X equals to or is smaller than half of the wavelength of the radiation field (L/2), in particular equals to or is smaller than one third of the wavelength of the radiation field (L/3).

In some very advantageous embodiments, the periodicity X equals to or is smaller than one quarter of the wavelength of the radiation field (L/4).

In principle, the smaller the periodicity X is, the better the birefringent effect of the structured part is and the smoother the manipulation of the polarization can be achieved.

On the other side, smaller periodicities are more difficult to produce.

For example, the periodicity X equals to or is larger than one twentieth of the wavelength of the radiation field (L/20), in particular is larger than one tenth of the wavelength of the radiation field (L/10) for ease of production. For example, the periodicity equals to or is larger than one fifth of the wavelength of the radiation field (L/5).

In preferred embodiments, the periodicity X equals to or is smaller than 700 nm, in particular equals to or is smaller than 600 nm. For example, the periodicity X equals to or is smaller than 500 nm.

In some advantageous embodiments, the periodicity X of the pattern of the structured part equals to or is larger than 10 nm, in particular equals to or is larger than 80 nm.

For example, the periodicity X of the pattern of the structured part equals to or is larger than 200 nm.

In particular, the ranges for the periodicity X are particular advantageous for radiation fields with a wavelength L which is for example larger than 100 nm, preferably larger than 500 nm, in particular larger than 800 nm and/or with a wavelength L which is preferably smaller than 2000 nm, in particular smaller than 1600 nm, for example smaller than 1200 nm.

For example, the wavelength L of the incident radiation field is at least approximately 1030 nm.

Preferably, the birefringent effect of the structured part is determined within the effective medium theory, which is in particular applicable if the periodicity is sufficiently smaller than the wavelength L.

For example, another relevant parameter of the structured part is the duty cycle C of the pattern of the structured part.

In particular, the duty cycle C is the width of the one kind of portion, in particular of the portions with the large refractive index, divided by the periodicity X.

In preferred embodiments, the duty cycle C is equal to or larger than 0,2, preferably equal to or larger than 0,3 and in particular equal to or larger than 0,4.

Advantageously, the duty cycle C is equal to or smaller than 0,9, in particular equal to or smaller than 0,8 and for example equal to or smaller than 0,7.

In some advantageous embodiments the duty cycle is at least approximately 0,55, for example 0,55 $\pm$ 0,1.

No further information about the design of the structured part have been given so far.

In particular, the portions of large refractive index have an aspect ratio, which is the height of the portion divided by the width of the portion.

In particular, the width is measured within the extension of the one layer or the several layers and the height is measured perpendicular to the extension of the one layer or several layers.

The aspect ratio of the portions of large refractive index is designed to achieve the desired optical properties, for example the desired birefringent effect.

For example, the aspect ratio of the portions of large refractive index is equal to or larger than 0,8 and/or equal to or smaller than 9.

In preferred embodiments, the structured part is formed by at least one layer, in particular by exactly one layer.

In particular, the structured part is formed by at least one layer with grooves in it, wherein advantageously the grooves form the portions of the small refractive index.

In particular, the grooves extend from a top surface of the grating mirror into the same with a depth D.

Preferably, the grooves extend through the entire layer or the entire layers which form the structured part. This provides for example for a high difference in the refractive index throughout the structured part.

Preferably, the depth D of the grooves is smaller than 2500 nm, in particular smaller than 2000 nm, for example smaller than 1500 nm.

Advantageously, the depth D of the grooves is larger than 50 nm, in particular larger than 150 nm, for example larger than 300 nm.

In preferred embodiments, the depth D of the grooves corresponds to the height of the portions of large refractive index and in particular the values of the depth D and of the height are the same.

With respect to the reflector no further details have been given so far.

The reflector can be designed in various ways.

In preferred embodiments, the reflector is built by a stack of layers with alternating refractive indices.

For example, this provides for an easy to build and high efficient reflector.

In particular, the stack of layers comprises layers of low refractive index and layers of high refractive index.

Preferably, the layers of low refractive index are composed of a material with a refractive index which is smaller than 1,7, in particular smaller than 1,5.

Advantageously, the layers of low refractive index are composed of a material with a refractive index which is larger than 1, for example larger than 1,2.

In preferred embodiments, the layers of high refractive index are composed of a material with a refractive index which is larger than 1,8, in particular larger than 2.

In particular, the layers of high refractive index are composed of a material with a refractive index which is smaller than 4.

Advantageously, a difference of the refractive indices between layers of low refractive index and high refractive index is larger than 0,4 and advantageously larger than 0,5.

For example, the difference of the refractive indices between layers of low refractive index and high refractive index is smaller than 3, for example smaller than 2.

In particular, the above given ranges for the values provide for a particular efficient reflector.

In advantageous embodiments, the layers of the reflector have an optical thickness of at least approximately a quarter of the wavelength L of the radiation field (L/4). The optical thickness is the refractive index times the physical thickness.

In particular, the layers of the reflector are built essentially as quarter wave layers.

For example, the layers of the reflector comprise $Ta_2O_5$, $HfO_2$, $Nb_2O_5$, $TiO_2$, $Al_2O_3$, $Si_3N_4$, and/or a:Si, in particular as high refractive index material, and/or $SiO_2$ and/or $MgF_2$, in particular as low refractive index materials.

No further details about the design of the grating mirror have been given so far.

In particular, the grating mirror comprises a substrate on which the reflector and the structured part are arranged.

Preferably, the reflector is on one side arranged on the substrate and on an opposite side of the reflector the structured part is arranged on the reflector, such that the reflector is in between the structured part and the substrate. Therefore, the substrate can provide stability to the grating mirror but with the reflector in between the substrate and the structured part the radiation field does not penetrate the substrate and therefore intensity loses within the substrate and/or distortions due to the penetration to the substrate are avoided.

Advantageously, the structured part, in particular the layer or the several layers building the structured part, are directly arranged on the reflector.

In particular advantageous embodiments, the grating mirror comprises a cooling device, which in particular cools the parts, preferably the structured part and the reflector, which are penetrated by the radiation field.

Preferably, the cooling device is provided at a side of the grating mirror opposite to the structured part.

In particular, the reflector is arranged between the cooling device and the structured part.

For example, the cooling device is attached to the substrate.

Preferably a heat sink element, in particular a massive heat sink element, is attached to the substrate.

For example, one advantage of this back side cooling is, that the cooling device can be provided close to the structured part and with a large area being cooled but with a reflector in between the radiation field does not have to pass through the cooling device and therefore distortions to the radiation field are avoided.

In an embodiment of the invention the problem given in the beginning is solved by a radiation providing system which comprises in particular a resonator and a grating mirror with a grating mirror having at least one, preferably several, of the aforementioned features.

Advantages discussed above in connection with the respective features transfer correspondingly to the radiation providing system.

In an advantageous embodiment, the resonator provides an outgoing amplified radiation field which is incident on the grating mirror.

Therefore, with the grating mirror for example a polarization of the outgoing amplified radiation field can be manipulated in a desired way.

In particular, above-mentioned incident and/or outgoing amplified radiation field is a laser, in particular a high power laser.

In some preferred embodiments, the radiation field, in particular the laser, is a continuous wave radiation field, in particular a continuous wave laser.

In other advantageous embodiments, the radiation field is a pulsed radiation field, in particular a pulsed laser.

Before and in the following the term "at least approximately" in connection with a feature, in particular with a value, is to be understood in particular that technically conditioned and/or technically irrelevant variations to the feature, in particular to the value, are also comprised. For example, variations to a given value of up to 30%, in particular up to 10%, for example up to 5%, are comprised by a value given at least approximately. In particular, with respect to directions the term "at least approximately" is to be understood, that deviations from the given direction up to 20°, preferably up to 10°, for example up to 5° are also comprised.

In particular, advantageous embodiments of the invention comprise the combination of features as defined by the following consecutively numbered embodiments.

1. Grating mirror (110) comprising a structured part (142) which acts birefringently on a radiation field (134) and further comprising a reflector (122) for the radiation field (134) on which the structured part (142) is arranged.

2. Grating mirror (110) according to embodiment 1, wherein the structured part (142) is designed to induce a phase shift to two contributions of the radiation field (134) passing through the structured part (142) with the two contributions having in particular polarizations perpendicular to each other and in particular the phase shift (S) is $\pi/n$ with n being an integer.

3. Grating mirror (110) according to one of the preceding embodiments, wherein the structured part (142) comprises a pattern of portions (154, 156) with alternating refractive indices.

4. Grating mirror (110) according to one of the preceding embodiments, wherein the structured part (142) comprises several segments (162).

5. Grating mirror (110) according to one of the preceding embodiments, wherein at least one of the several segments (162) is designed, in particular the portions within this at least one segment are designed, to rotate the polarization of the radiation field (134) at least approximately by 180° upon passing through the structured part (142).

6. Grating mirror (110) according to one of the preceding embodiments, wherein at least one of the several segments (162) is designed, in particular the portions (154, 156) within this at least one segment are designed, to have a minimal effect on the polarization of the radiation field (134) upon passing through the structured part (142).

7. Grating mirror (110) according to one of the preceding embodiments wherein the polarization of the radiation field (134) upon passing through the structured part (142) is in one of the several segments (162) rotated about a maximal angle and in another of the several segments (162) rotated about a minimal angle and in the segments (162) positioned between the segments (162) with the maximal and minimal angle the polarization of the radiation field (134) is rotated upon passing through the respective segment (162) of the structured part (142) about an angle which is larger for a segment (162) which is closer to the segment (162) exhibiting the maximal angle than for a segment further away from the segment exhibiting the maximal angle and/or about an angle which is smaller for a segment (162) which is closer to the segment exhibiting the minimal angle than for a segment further away from the segment exhibiting the minimal angle.

8. Grating mirror (110) according to one of the preceding embodiments, wherein an angle about which the polarization of the incident radiation field (134) is rotated upon passing through the structured part (142) increases at least approximately steadily from a region of minimal rotation to a region of maximal rotation.

9. Grating mirror (110) according to one of the preceding embodiments, wherein in at least two different segments (162) the respective directions of elongated extension of the portions (154, 156) within the at least two different segments (162) are differently orientated to each other.

10. Grating mirror (110) according to one of the preceding embodiments, wherein the respective direction of elongated extension of the portions (154, 156) in at least two different segments (162) are at least approximately perpendicular to each other.

11. Grating mirror (110) according to one of the preceding embodiments, wherein a difference of the refractive indices of the portions (154, 156) is at least 0,1 or larger, in particular at least 0,3 or larger, in particular 0,5 or larger.

12. Grating mirror (110) according to one of the preceding embodiments, wherein portions (154, 156) of the structured part (142) are composed of a material with a refractive index of at least 1,7, in particular of at least 2.

13. Grating mirror (110) according to one of the preceding embodiments, wherein some portions (154, 156) of the structured part (142) are formed by grooves (144) in the structured part (142).

14. Grating mirror (110) according to one of the preceding embodiments, wherein the portions (154, 156) of the structured part (142) run linearly essentially throughout the structured part (142).

15. Grating mirror (110) according to one of the preceding embodiments, wherein a direction of elongated extension of the portions (154, 156) within a geometrical structure plane of the structure part (142) varies locally.

16. Grating mirror (110) according to one of the preceding embodiments, wherein the direction of elongated extension turns at least quasi-steadily between two regions (160, 161) of extremal orientation.

17. Grating mirror (110) according to one of the preceding embodiments, wherein the direction of elongated extension varies along a circumferential direction around a central axis of the grating mirror (110).

18. Grating mirror (110) according to one of the preceding embodiments, wherein the portions (154, 156) of the structured part (142) have at least approximately a parabolic shape.

19. Grating mirror (110) according to one of the preceding embodiments, wherein the portions (154, 156) of the structured part (142) run piecewise linearly.

20. Grating mirror (110) according to one of the preceding embodiments, wherein within the structured part (142) the refractive index varies on a length scale which is smaller than the wavelength L of the radiation field (134).

21. Grating mirror (110) according to one of the preceding embodiments, wherein a periodicity (X) of a pattern in the structured part (142) is smaller than the wavelength L of the incident radiation field (134), in particular smaller than L/2, in particular smaller than L/3, in particular smaller than L/4.

22. Grating mirror (110) according to one of the preceding embodiments, wherein a periodicity (X) of the pattern of the structured part (142) is smaller than 700 nm, in particular smaller than 600 nm and/or larger than 100 nm, in particular larger than 200 nm.

23. Grating mirror (110) according to one of the preceding embodiments, wherein a duty cycle (C), which is the width of portions with a large refractive index divided by the periodicity (X), of the pattern of the structured part (142) is equal to or larger than 0,2, in particular equal to or larger than 0,3 and/or equal to or smaller than 0,8.

24. Grating mirror (110) according to one of the preceding embodiments, wherein the portions (156) with large refractive index have an aspect ratio (H/V) which is the height (H) of the portion (156) divided by the width (V) of the portion (156) and the aspect ratio is the same as or larger than 0,8 and/or is equal to or smaller than 9.

25. Grating mirror (110) according to one of the preceding embodiments, wherein the structured part (142) is formed by at least one layer with grooves (144) in it.

26. Grating mirror (110) according to the preceding embodiment, wherein the grooves (144) extend from a top surface of the grating mirror (110) into the same with a depths, wherein in particular the depth is smaller than 1500 nm and/or larger than 300 nm.

27. Grating mirror (110) according to one of the preceding embodiments, wherein the reflector (122) is built by a stack of layers (124, 126) with alternating refractive indices.

28. Grating mirror (110) according to one of the preceding embodiments, wherein the reflector (122) is on one side arranged on a substrate (114) and on an opposite side of the reflector (122) the structured part (142) is arranged on the reflector (122).

29. Grating mirror (110) according to one of the preceding embodiments, wherein a cooling device is provided at the side of the grating mirror (110) opposite to the structured part (142).

30. Radiation providing system (170) comprising a grating mirror (110) according to one of the preceding embodiments and in particular a resonator (174).

31. Radiation providing system (170) according to the preceding embodiment, wherein the resonator (174) provides an outgoing amplified radiation field (134) which is incident on the grating mirror (110).

Further explanations with respect to the present invention and about preferred features and advantages are provided hereafter in connection with the detailed specification and the drawings.

In the drawings:

Fig. 1   shows a schematic cross section of a grating mirror;

Fig. 2   shows an enlarged view of a structured part of the grating mirror;

Fig. 3   shows a top view on a structured part with linear portions;

Fig. 4   shows a top view on a structured part with portions having an essentially parabolic shape;

Fig. 5    shows a top view on a structured part with several segments with piecewise linear portions;

Fig. 6    shows schematically a manipulation of a polarization of a radiation field from a linear polarization to a radial polarization; and

Fig. 7    shows a radiation field providing system with a grating mirror.

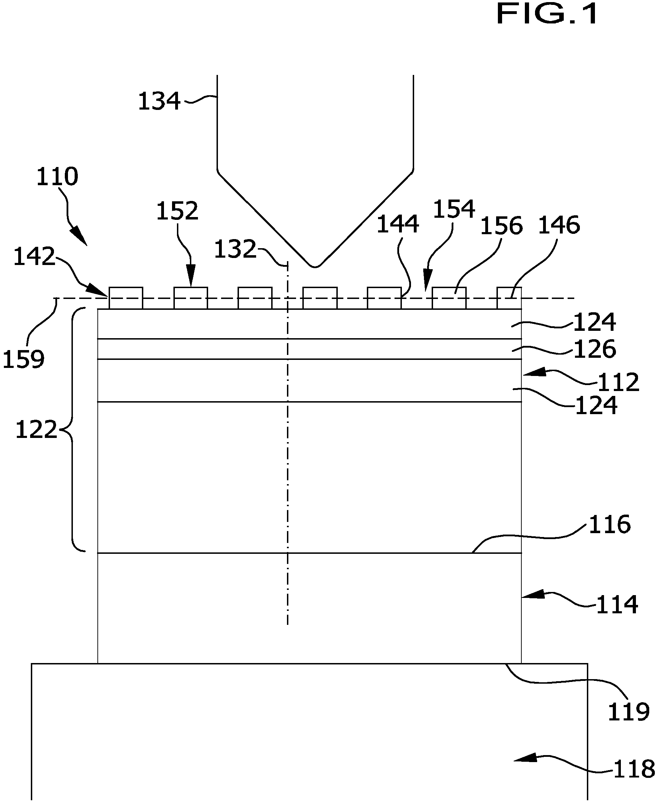

An embodiment of a grating mirror 110, exemplarily shown in Fig. 1, comprises a stack of layers 112, which is provided on a substrate 114.

The substrate 114 has a supporting side 116, which faces towards the stack 112. In particular the supporting side 119 is flat.

Preferably, a cooling device 118 is attached to the substrate 114 at a side 119 which is opposite to supporting side 116.

For example, a massive heat sink element with large thermal conductivity is attached to the opposite side 119.

In other variants of the embodiment the cooling device comprises a water cooling system and a conduit passes along opposite side 119.

The stack of layers 112 comprises a plurality of layers, which build up a reflector 122 which are preferably arranged directly on the supporting side 116, such that the lowermost layer of the plurality of layers contacts the supporting side 116.

The plurality of layers, which build the reflector 122, comprises a first group 124 of layers with a low refractive index and a second group of layers 126 with a high refractive index and the layers 124 with low refractive index and layer 126 with high refractive index are alternatingly arranged within the reflector 122.

The layers 124 and 126 of reflector 122 run at least approximately perpendicular to an optical axis 132 of the grating mirror 110 and are arranged subsequently in axial direction with respect to the optical axis 132 with alternating high and low refractive index.

For example, the difference between the low refractive index and the high refractive index of layers 124, 126 of reflector 122 is at least 0,3 and preferably at least 0,6.

In particular, the low refractive index is smaller than 1,6. For example it is at least approximately 1,45.

In particular, the high refractive index is 1,9. For example it is at least approximately 2,2.

In different variants of the embodiment different materials for the layers 124, 126 are used.

For example in one variant the low refractive index layers 124 are composed of $SiO_2$.

For example, in some variants of the embodiment the layers with high refractive index are composed of $Ta_2O_5$.

For example, the plurality of layers 124, 126 is comprised of at least 10 layers. In particular, the plurality of layers 124, 126 comprises less than 50 layers.

In some variants of the embodiment the plurality of layers 124, 126 comprises for example at least approximately 28 layers.

The design of plurality of layers 124, 126 is designed to be such that the reflector 122 built of these layers 124, 126 is highly reflective for an incident radiation field 134, which in particular is incident on the grating mirror 110 at least approximately in axial direction with respect to the optical axis 132.

In particular, the reflector 122 has a reflection coefficient which is independent of the polarization of the incident radiation field 134.

For example, the reflector 122 has a reflection coefficient of at least 0,9 and preferably of at least 0,98.

The stack of layers 112 comprises a structured part 142, which acts birefringently an incident radiation field 134.

The structured part 142 is arranged, in particular directly, on top of reflector 122, such that reflector 122 is between structured part 142 and substrate 114.

Radiation field 134 is incident on structured part 142, passes through structured part 142 and is then reflected by reflector 122 to pass again through structured part 142 and exits grating mirror 110.

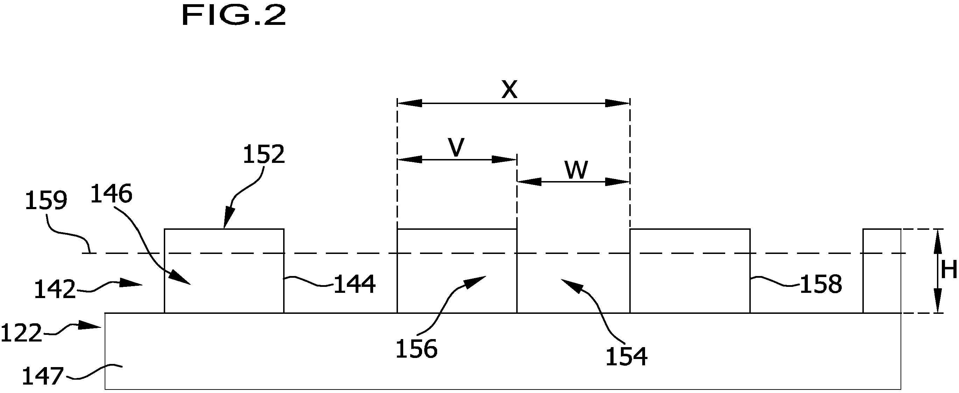

Structured part 142 is build in this embodiment by grooves 144 in a structured layer 146 of the stack of layers 112, with structured layer 146 being in particular arranged directly on uppermost layer 147 of reflector 122, as exemplarily shown in Fig. 2.

Apparently, in variants of the embodiment the structured part 142 could comprise several structured layers 146.

The grooves 144 penetrate from a top surface 152 of structured part 142 at least approximately in axial direction with respect to optical axis 132 into the structured layer 146 and for example as far as the reflector 122.

The top surface 152 of structured part 142 is also the top surface of grating mirror 110 on which radiation field 134 is incident.

In particular, the top surface 152 is essentially flat and extends at least approximately perpendicular to optical axis 132.

The grooves 144 build portions 154 of structured part 142 with a small refractive index, in particular being free of material of the grating mirror 110, and are bounded laterally with respect to the optical axis 132 by portions 156 of structured layer 146 which exhibit a large refractive index.

In particular, the grooves 144 penetrate from the top surface 152 at least approximately along a boundary surface 158 in axial direction with respect to optical axis 132 into the layer 146 of structured part 142. The boundary surface 158 bounds the grooves 144 laterally and a bottom of the grooves 144 is built by a layer of the stack of layers 112, here for example by upper most layer 147 of reflector 122.

Preferably, the boundary surfaces 158 between portions 154, 156 of small and large refractive index, here the lateral surfaces of portions 156 of the structured layer 146 which bound a respective groove 144 laterally, run at least approximately in axial direction of optical axis 132. For example an angle between the optical axis 132 and the boundary surface 158 is smaller than 15°, preferably smaller than 8°.

The boundary surfaces 158 run at least approximately perpendicular to the top surface 152. For example an angle between the top surface 152 and boundary surfaces 158 is within the range 90° +/- 15°, preferably within the range 90° +/- 8°.

The structured part 142 exhibits a sub-wavelength structure.

In particular, the structured part 142 extends in a geometrical structure plane 159.

Preferably, the grooves 144 and the portions 156 run side by side within geometrical structure plane 159 elongated in a direction of elongated extension and their arrangement in a direction at least approximately perpendicular to the direction of elongated extension is structured in sub-wavelength manner.

In particular, widths W and V of portions 154 and 156 with small and large refractive index are smaller than wavelength L of radiation field 134, preferably smaller than L/2.

For example, widths W and V of portions 154 and 156 are smaller than 500 nm.

In particular, widths W and V of portions 154 and 156 are measured in a direction within geometrical structure plane 159, which is preferably at least approximately perpendicular to the direction of elongated extension. Advantageously, a periodicity X with which at least locally a structure within the structured part 142 repeats is smaller than a wavelength L of incident radiation field 134 and in particular periodicity X is smaller than L/2, preferably smaller than L/4.

In particular, the periodicity X is the sum of the lateral width W of the portions 154 with small refractive index and the lateral width V of the portions 156 with large refractive index, whereas in this lateral direction these portions 154 and 156 are alternatingly repeating.

For example, the periodicity X is smaller than 550 nm. For example a lower limit of the periodicity X is given by the production process and/or by the design of the structured part 142.

The structured layer 146 building the portions 156 with large refractive index can be composed of different materials. The composing material has preferably a refractive index of 2 or larger.

For example in some variants the structured layer 146 is composed of $Ta_2O_5$.

In other variants of the embodiment the structured layer 146 is composed of amorphous silicon.

The structured part 142 exhibits therefore in two directions which are at least approximately perpendicular to each other within geometrical structure plane 159 different structures built by portions 154 and 156 and therefore the radiation field 134 which passes through structured part 142 experiences within the structured part 142 a refractive index n=n(P) which depends on the polarization P of incident radiation field 134.

Accordingly, the structured part 142 acts birefringently on the radiation field 134 passing through the structured part and therefore the polarization of the radiation field 134 can be manipulated.

For example, the height H of the structured part 142 is measured at least approximately perpendicular to geometrical structure plane 159 and in particular in axial direction with respect to the optical axis 132 and corresponds in this embodiment to the thickness of the structured layer 146.

Height H can be adjusted to achieve a desired phase shift S between contributions to the radiation field 134 with respective polarizations.

The phase shift S between two contributions of radiation field 134 with perpendicular polarizations $P_E$ and $P_M$ can be calculated, for example within effective medium theory, to be

$$L\ S = 2\pi H \Delta = 2\pi \int_0^H dz\,[\,n_E(z) - n_M(z)\,]$$

with the wavelength L of the radiation field and $\Delta$ being the effective difference of the refractive indexes. z is the coordinate along which radiation field 134 passes through the structured part 142, in particular the coordinate along the optical axis 132. The integral runs over the extend of structured part 142 in z-direction, that is from z=0 to z = H, where in particular at z=0 the structured part is attached to the reflector and at z=H there is the top surface of the structured part. $n_E$ and $n_M$ are the effective refractive indexes of the structured part for the contribution with polarization $P_E$ and and the contribution with polarization $P_M$, respectively, with the effective refractive indexes may vary along the z-direction.

In particular, for polarization $P_E$ the electrical field oscillates along the elongated direction of the portions and for polarization $P_M$ the electrical field oscillates perpendicular thereto.

The effective refractive indexes $n_E$ and $n_M$ are given in zeroth order of effective medium theory as

$$n_E^{(o)} = \sqrt{\frac{V}{X} * n_s^2 + n_a^2 * \left(1 - \frac{V}{X}\right)}$$

and

$$n_M^{(o)} = \frac{\sqrt{n_s^2 * n_a^2}}{\sqrt{\frac{V}{X} * n_a^2 + n_s^2 \left(1 - \frac{V}{X}\right)}}$$

and in second order as and

$$n_E^{(2)} = \sqrt{\left(n_E^{(o)}\right)^2 + \frac{1}{3} * \left(\frac{X}{L}\right)^2 * \pi^2 * \left(\frac{V}{X}\right)^2 * \left(1 - \frac{V}{X}\right)^2 (n_s^2 - n_a^2)^2}$$

$$n_M^{(2)} = \sqrt{\left(n_M^{(o)}\right)^2 + \frac{1}{3} * \left(\frac{X}{L}\right)^2 * \pi^2 * \left(\frac{V}{X}\right)^2 * \left(1 - \frac{V}{X}\right)^2 \left(\frac{1}{n_s^2} - \frac{1}{n_a^2}\right)^2 \left(n_E^{(o)}\right)^2 \left(n_M^{(o)}\right)^6}$$

with ns being the large refractive index of portions 156 and na being the small refractive index of portions 154 and V being the width of portion 156 with large refractive index which as V=V(z) may vary in z-direction.

The manipulation of the polarization can be freely chosen by designing the structured part 142 and adjusting the geometrical parameters such as the height H, the lateral widths V and W, and/or the periodicity X.

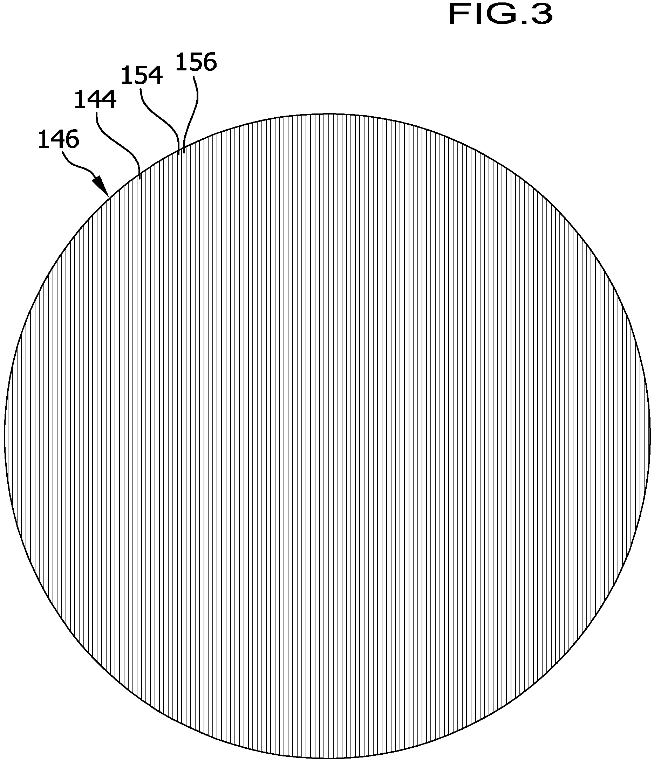

For example in one variant of the embodiment the grooves run essentially linear throughout the structured layer 146 and are parallel to each other, as exemplarily shown in Fig. 3.

With such a design an at least approximately homogenous transformation of the polarization of the radiation field 134 is achieved.

In particular, the effect of the structured part 142 in this variant is comparable to the one of a waveplate.

In particular, the design of the structure part 142 is such that the phase shift for contributions to the radiation field 134 which have polarizations perpendicular to each other is $\pi/2$ per each passing through the structured part 142 and therefore due to the reflection at the reflector 122 the contributions experience in total a phase shift of $\pi$ by the grating mirror 110.

In this case the design of the structured part has to be such that the equation

$$(\pi/2) \, L = 2 \, \pi \, H \, \Delta$$

is fulfilled, with wavelength L of radiation field 134, $\Delta$ being the effective difference in the effective refractive indexes for the two contributions, and H being the height of the structured part 142.

In this case the grating mirror 110 can be used for example as a half-wave-plate.

In another variant of the embodiment the grating mirror 110 can be used similar to a quarter-wave-plate in which case the phase shift per passing through the structured part 142 has to be $\pi/4$ and accordingly the design of the structured part 142 has to be such that the parameters fulfill the following equation

$$(\pi/4) \, L = 2 \, \pi \, H \, \Delta.$$

In other variants of the embodiment the structure within structure part 142 is designed to manipulate the polarization of the radiation field 134 locally differently and therefore the portions 154 and 156 with small and large refractive indexes run locally in a different direction.

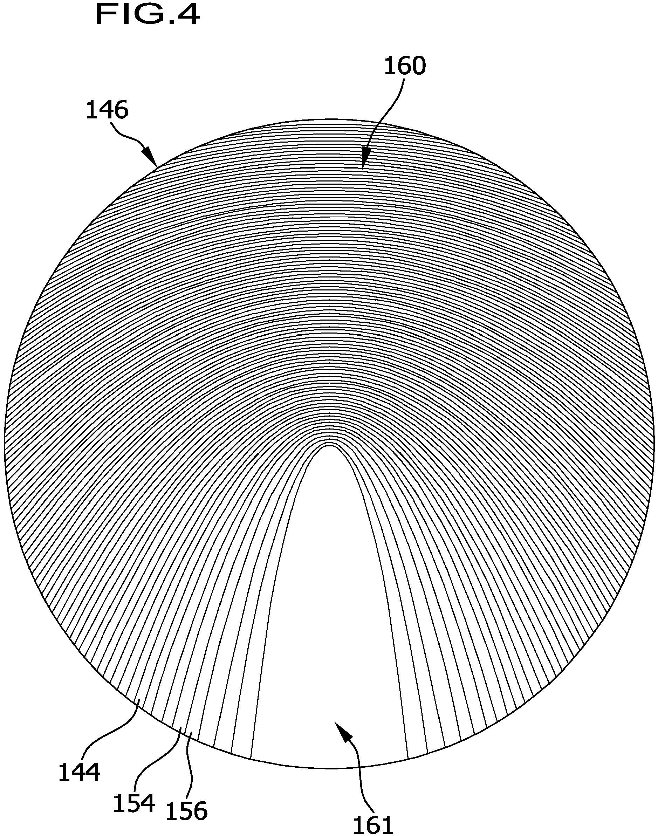

For example, to achieve a conversion from a linear polarization to a radial or azimuthal polarization the portions 154, 156 run at least approximately along parabolic contour lines, as exemplarily shown in Fig. 4.

In this case, the direction of elongated extension runs essentially along the parabolic shape and the periodicity is given at least approximately perpendicular thereto that is in particular from an inside parabolic shape to parabolic shapes more outside.

Accordingly, the direction of elongated extension turns steadily and even continuously.

This structure exhibits two regions 160, 161 of extremal effect on the radiation field, the one being at the bottom of the parabolas formed by the portions 145 and 156 and the other extremal portion 161 being in between the branches of the parabolas.

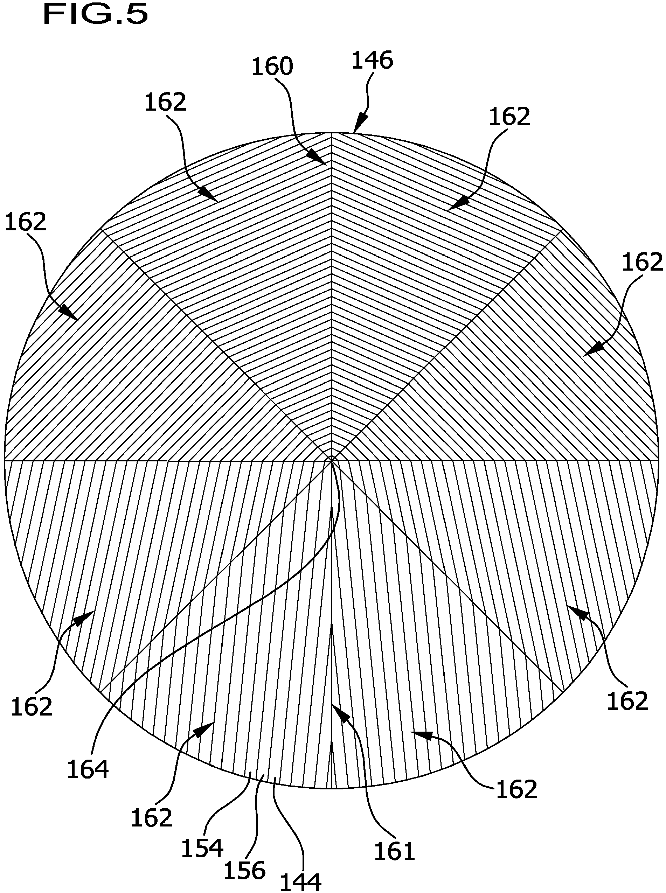

In other advantageous variants of the embodiment a favorable structure of portions 154, 156 along curved contour lines, in particular along parabolic contour lines, is approximated by locally piecewise linear extending portions 154, 156, as exemplarily shown in Fig. 5.

The structured part 142 is lateral to the optical axis 132 divided into several segments 162, for example into circular sectors around a common center 164 through which a central axis runs.

Within each of the segments 162, the portions 154 and 156 run parallel to each other in a respective direction of linear elongated extension with each linear direction being different in each of the segments 162.

In particular, this structured part has two regions 160, 161 of extremal effect on the radiation field 134.

In one of these regions, for example region 160, the direction of elongated extension of the portions 154, 156 runs at least approximately tangential to a central axis which runs through the center 164 and at least approximately perpendicular to the geometrical structure plane 159.

In particular, the direction of elongated extension in two neighboring segments in that region 160 are only slightly angled to each other. In particular, an angle between these directions is larger than 90°, for example larger than 130°.

In the other of these regions, for example in region 161, the direction of elongated extension of the portions 154, 156 runs at least approximately in a radial direction with respect to the central axis through center 164.

For example, in this region 161 the directions of elongated extension in two neighboring segments run nearly parallel to each other, in particular an angle between these directions is smaller than 45°, for example smaller than 25°.

In between the two regions 160, 161, the direction of elongated extension turns steadily from being at least approximately tangential to being at least approximately radial.

In this variant of the embodiment, the direction of elongated extension turns stepwise from one segment to the next segment in a steady manner.

For example the other parameters of the design, in particular the lateral widths V and W and the height H of the portions 154 and 156 are the same in the different segments 162.

In particular, the segments are designed to achieve a phase shift $S = \pi/2$ between the two perpendicular polarized contributions of the radiation field 134 per pass through the structured part 142. Therefore the parameters are chosen to fulfill for example the equation

$$(\pi/2)\, L = 2\, \pi\, H\, \Delta,$$

with $\Delta$ being the effective difference in refractive indexes, L being the wavelength of radiation field 134 and H being the height of structured part 142.

To summarize, in particular grating mirror 110 comprises a structured part 142, portions 154 and 156 of which have a small and large refractive index and exhibit a subwavelength structure such that structured part 142 acts birefringently on radiation field 134 incident on and passing through structured part 142.

Reflector 122 is with respect of incident radiation field 134 arranged behind structured part 142 such that radiation field 134 is reflected and passes again through structured part 142.

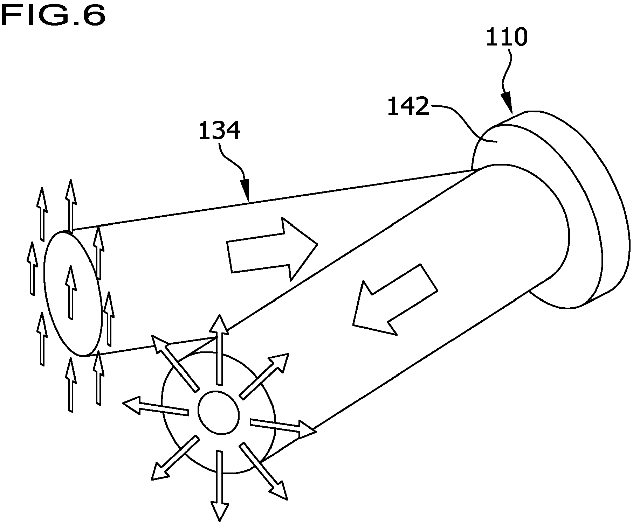

Due to the birefringent effect of structured part 142 the reflected radiation field has a different polarization than incident radiation field as exemplarily shown in Fig. 6, in which the linear polarization of incident radiation field is changed to a radial polarization of the reflected radiation field.

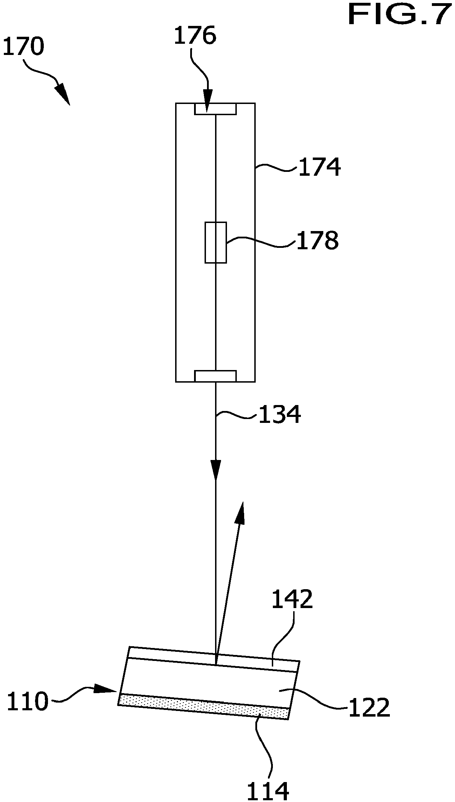

The grating mirror 110 is for example part of a radiation providing system 170, as exemplarily shown in Fig. 7.

In particular, the grating mirror 110 is provided within an optical path for an outgoing radiation field provided in the system 170 in order to manipulate the polarization of the radiation field as desired by a user of the system 170.

For example, the radiation providing system 170 comprises a resonator 174 which provides an amplified radiation field which is directed onto grating mirror 110 to change its polarization in particular as described above.

The resonator 174 comprises in particular an optical system 176 and an amplifying unit 178. The optical system 176 directs for example with at least two end mirrors the to be amplified radiation field repeatedly along an optical path passing through the amplifying unit 178. At an outcoupling element an amplified radiation field is outcoupled as outgoing radiation field.

**Claims**

1. Grating mirror (110) comprising a structured part (142) which acts birefringently on a radiation field (134) and further comprising a reflector (122) for the radiation field (134) on which the structured part (142) is arranged.

2. Grating mirror (110) according to claim 1, wherein the structured part (142) is designed to induce a phase shift to two contributions of the radiation field (134) passing through the structured part (142) with the two contributions having in particular polarizations perpendicular to each other and in particular the phase shift (S) is $\pi/n$ with n being an integer.

3. Grating mirror (110) according to one of the preceding claims, wherein the structured part (142) comprises a pattern of portions (154, 156) with alternating refractive indices.

4. Grating mirror (110) according to one of the preceding claims, wherein the structured part (142) comprises several segments (162),
wherein in particular at least one of the several segments (162) is designed, in particular the portions within this at least one segment are designed, to rotate the polarization of the radiation field (134) at least approximately by 180° upon passing through the structured part (142) and/or
wherein in particular at least one of the several segments (162) is designed, in particular the portions (154, 156) within this at least one segment are designed, to have a minimal effect on the polarization of the radiation field (134) upon passing through the structured part (142), and/or
wherein in particular the polarization of the radiation field (134) upon passing through the structured part (142) is in one of the several segments (162) rotated about a maximal angle and in another of the several segments (162) rotated about a minimal angle and in the segments (162) positioned between the segments (162) with the maximal and minimal angle the polarization of the radiation field (134) is rotated upon passing through the respective segment (162) of the structured part (142) about an angle which is larger for a segment (162) which is closer to the segment (162) exhibiting the maximal angle than for a segment further away from the segment exhibiting the maximal angle and/or about an angle which is smaller for a segment (162) which is closer to the segment exhibiting the minimal angle than for a segment further away from the segment exhibiting the minimal angle.

5. Grating mirror (110) according to one of the preceding claims, wherein an angle about which the polarization of the incident radiation field (134) is rotated upon passing through the structured part (142) increases at least approximately steadily from a region of minimal rotation to a region of maximal rotation.

6. Grating mirror (110) according to one of the preceding claims, wherein in at least two different segments (162) the respective directions of elongated extension of the portions (154, 156) within the at least two different segments (162) are differently orientated to each other, wherein in particular the respective direction of elongated extension of the portions (154, 156) in at least two different segments (162) are at least approximately perpendicular to each other.

7. Grating mirror (110) according to one of the preceding claims, wherein a difference of the refractive indices of the portions (154, 156) is at least 0,1 or larger, in particular at least 0,3 or larger, in particular 0,5 or larger and/or wherein portions (154, 156) of the structured part (142) are composed of a material with a refractive index of at least 1,7, in particular of at least 2.

8. Grating mirror (110) according to one of the preceding claims, wherein some portions (154, 156) of the structured part (142) are formed by grooves (144) in the structured part (142) and/or wherein the portions (154, 156) of the structured part (142) run linearly essentially throughout the structured part (142).

9. Grating mirror (110) according to one of the preceding claims, wherein a direction of elongated extension of the portions (154, 156) within a geometrical structure plane of the structure part (142) varies locally, wherein in particular the direction of elongated extension turns at least quasi-steadily between two regions (160, 161) of extremal orientation, and/or wherein in particular the direction of elongated extension varies along a circumferential direction around a central axis of the grating mirror (110).

10. Grating mirror (110) according to one of the preceding claims, wherein the portions (154, 156) of the structured part (142) have at least approximately a parabolic shape and/or wherein the portions (154, 156) of the structured part (142) run piecewise linearly.

11. Grating mirror (110) according to one of the preceding claims, wherein within the structured part (142) the refractive index varies on a length scale which is smaller than the wavelength L of the radiation field (134).

12. Grating mirror (110) according to one of the preceding claims, wherein a periodicity (X) of a pattern in the structured part (142) is smaller than the wavelength L of the incident radiation field (134), in particular smaller than L/2, in particular smaller than L/3, in particular smaller than L/4 and/or
wherein a periodicity (X) of the pattern of the structured part (142) is smaller than 700 nm, in particular smaller than 600 nm and/or larger than 100 nm, in particular larger than 200 nm and/or
wherein a duty cycle (C), which is the width of portions with a large refractive index divided by the periodicity (X), of the pattern of the structured part (142) is equal to or larger than 0,2, in particular equal to or larger than 0,3 and/or equal to or smaller than 0,8 and/or wherein the portions (156) with large refractive index have an aspect ratio (H/V) which is the height (H) of the portion (156) divided by the width (V) of the portion (156) and the aspect ratio is the same as or larger than 0,8 and/or is equal to or smaller than 9.

13. Grating mirror (110) according to one of the preceding claims, wherein the structured part (142) is formed by at least one layer with grooves (144) in it,
wherein in particular the grooves (144) extend from a top surface of the grating mirror (110) into the same with a depths, wherein in particular the depth is smaller than 1500 nm and/or larger than 300 nm.

14. Grating mirror (110) according to one of the preceding claims, wherein the reflector (122) is built by a stack of layers (124, 126) with alternating refractive indices and/or
wherein the reflector (122) is on one side arranged on a substrate (114) and on an opposite side of the reflector (122) the structured part (142) is arranged on the reflector (122) and/or
wherein a cooling device is provided at the side of the grating mirror (110) opposite to the structured part (142).

15. Radiation providing system (170) comprising a grating mirror (110) according to one of the preceding claims and in particular a resonator (174), wherein in particular the resonator (174) provides an outgoing amplified radiation field (134) which is incident on the grating mirror (110).

FIG.1

## FIG.2

EP 4 092 458 A1

FIG.3

146 144 154 156

## FIG.4

# FIG.5

# FIG.6

EP 4 092 458 A1

FIG.7

Europäisches
Patentamt

European
Patent Office

Office européen
des brevets

**EUROPEAN SEARCH REPORT**

Application Number

EP 21 17 4795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/152701 A1 (TOTZECK MICHAEL [DE] ET AL) 13 July 2006 (2006-07-13) <br> * paragraphs [0062], [0103] - [0106]; figures 3,13 * | 1-15 | INV. <br> G02B5/18 <br> G02B5/30 |
| X | US 2003/156325 A1 (HOSHI HIKARU [JP]) 21 August 2003 (2003-08-21) <br> * paragraphs [0206], [0207]; figure 37 * <br> * paragraphs [0163] - [0165]; figure 28 * | 1-9, 11-13,15 | |
| X | RICHTER I ET AL: "DESIGN CONSIDERATIONS OF FORM BIREFRINGENT MICROSTRUCTURES", APPLIED OPTICS, OPTICAL SOCIETY OF AMERICA, WASHINGTON, DC, US, vol. 34, no. 14, 10 May 1995 (1995-05-10), pages 2421-2429, XP000511438, ISSN: 0003-6935, DOI: 10.1364/AO.34.002421 <br> * figure 2 * | 1,10 | |
| X | US 6 680 799 B1 (PARRIAUX OLIVIER [FR] ET AL) 20 January 2004 (2004-01-20) <br> * column 12, line 16 - column 13, line 31; figure 5 * | 1 | TECHNICAL FIELDS SEARCHED (IPC) <br><br> G02B |
| X | LIU J ET AL: "INFRARED QUARTER-WAVE REFLECTOR RETARDERS DESIGNED WITH HIGH-SPATIAL-FREQUENCY DIELECTRIC SURFACE-RELIEF GRATINGS ON A GOLDSUBSTRATE AT OBLIQUE INCIDENCE", APPLIED OPTICS, OPTICAL SOCIETY OF AMERICA, WASHINGTON, DC, US, vol. 35, no. 28, 1 October 1996 (1996-10-01), pages 5557-5562, XP000629789, ISSN: 0003-6935, DOI: 10.1364/AO.35.005557 <br> * figure 1 * | 1 | |

-/--

The present search report has been drawn up for all claims

| Place of search | Date of completion of the search | Examiner |
|---|---|---|
| Munich | 3 November 2021 | Mollenhauer, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 17 4795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TYAN R-C ET AL:  "POLARIZING BEAM SPLITTER BASED ON THE ANISOTROPIC SPECTRAL REFLECTIVITY CHARACTERISTIC OF FORM-BIREFRINGENT MULTILAYER GRATINGS", OPTICS LETTERS, OPTICAL SOCIETY OF AMERICA, US, vol. 21, no. 10, 15 May 1996 (1996-05-15), pages 761-763, XP000589963, ISSN: 0146-9592 * figure 1 * ----- | 1 | |
| X | US 5 852 688 A (BRINKMAN MICHAEL J [US] ET AL) 22 December 1998 (1998-12-22) * column 33, line 63 - column 34, line 18; figure 22 * ----- | 1 | |

| | TECHNICAL FIELDS SEARCHED (IPC) |
|---|---|

The present search report has been drawn up for all claims

| Place of search | Date of completion of the search | Examiner |
|---|---|---|
| Munich | 3 November 2021 | Mollenhauer, Ralf |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 21 17 4795

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2021

| Patent document cited in search report | | | Publication date | Patent family member(s) | | | Publication date |
|---|---|---|---|---|---|---|---|
| US 2006152701 | A1 | | 13-07-2006 | EP | 1697797 | A2 | 06-09-2006 |
| | | | | KR | 20060118517 | A | 23-11-2006 |
| | | | | US | 2004184019 | A1 | 23-09-2004 |
| | | | | US | 2006152701 | A1 | 13-07-2006 |
| | | | | WO | 2005059653 | A2 | 30-06-2005 |
| US 2003156325 | A1 | | 21-08-2003 | NONE | | | |
| US 6680799 | B1 | | 20-01-2004 | NONE | | | |
| US 5852688 | A | | 22-12-1998 | CN | 1157659 | A | 20-08-1997 |
| | | | | EP | 0783719 | A1 | 16-07-1997 |
| | | | | JP | H10507281 | A | 14-07-1998 |
| | | | | KR | 970705773 | A | 09-10-1997 |
| | | | | US | 5703710 | A | 30-12-1997 |
| | | | | US | 5852688 | A | 22-12-1998 |
| | | | | US | 6393172 | B1 | 21-05-2002 |
| | | | | WO | 9607949 | A1 | 14-03-1996 |

EPO FORM P0459

For more details about this annex : see Official Journal of the European Patent Office, No. 12/82